# EUROPÄISCHE PATENTSCHRIFT

(11) **EP 4 060 167 B1**
(45) Veröffentlichungstag und Bekanntmachung des Hinweises auf die Patenterteilung: **03.04.2024**
(21) Anmeldenummer: 22156011.3
(22) Anmeldetag: 10.02.2022
(51) Int. Cl.: F01N 3/00, F01N 3/20, F01N 3/28

(54) **ABGASBEHANDLUNGSANORDNUNG FÜR EINE ABGASANLAGE EINER BRENNKRAFTMASCHINE**
EXHAUST GAS TREATMENT ASSEMBLY FOR AN EXHAUST GAS SYSTEM OF A COMBUSTION ENGINE
AGENCEMENT DE TRAITEMENT DES GAZ D'ÉCHAPPEMENT POUR UNE INSTALLATION DE GAZ D'ÉCHAPPEMENT D'UN MOTEUR À COMBUSTION INTERNE

(30) Priorität: 15.03.2021 DE 102021106167
(43) Veröffentlichungstag der Anmeldung: 21.09.2022
(73) Patentinhaber: Purem GmbH, 66539 Neunkirchen (DE)
(72) Erfinder: Kohberg, Carsten, Wendlingen (DE); Henzler, Markus, Grafenberg (DE); Wieland, Arthur, Baltmannsweiler (DE)
(74) Vertreter: Ruttensperger Lachnit Trossin Gomoll

(56) Entgegenhaltungen:
- GB-A- 2 476 049
- US-A1- 2014 250 865
- US-A1- 2021 017 893

## Beschreibung

Die vorliegende Erfindung betrifft eine Abgasbehandlungsanordnung, welche in einer Abgasanlage einer Brennkraftmaschine, insbesondere in einem Fahrzeug, dazu genutzt werden kann, das von einer Brennkraftmaschine ausgestoßene Abgas einem Abgasreinigungsprozess zu unterziehen.

Zur Verringerung des Schadstoffanteils in dem von einer Brennkraftmaschine ausgestoßenen Abgas ist es bekannt, verschiedene Abgasbehandlungseinheiten, wie zum Beispiel Katalysatoren und Partikelfilter, einzusetzen. Beispielsweise ist es Verbindung mit Diesel-Brennkraftmaschinen bekannt, zum Verringern des Stickoxidanteils im Abgas SCR-Katalysatoren einzusetzen, wie in US2014250865A1 offenbart.

Es ist die Aufgabe der vorliegenden Erfindung, eine Abgasbehandlungsanordnung für eine Abgasanlage einer Brennkraftmaschine vorzusehen, welche eine Beeinträchtigung der Funktionalität eines im Abgasströmungsweg angeordneten SCR-Katalysators durch im Abgasstrom mitgeführte Kohlenwasserstoffpartikel vermeidet.

Erfindungsgemäß wird diese Aufgabe gelöst durch eine Abgasbehandlungsanordnung für eine Abgasanlage einer Brennkraftmaschine gemäß Anspruch 1. Diese Abgasbehandlungsanordnung umfasst:
- einen zu einer Strömungsweg-Umschalteinheit führenden Abgaskanal, wobei die Strömungsweg-Umschalteinheit zum Verändern von in einen ersten Abgasströmungsweg stromabwärts der Strömungsweg-Umschalteinheit und einen zweiten Abgasströmungsweg stromabwärts der Strömungsweg-Umschalteinheit geleiteten Abgasstromanteilen eines den Abgaskanal durchströmenden Abgasstroms ausgebildet ist, wobei der erste Abgasströmungsweg und der zweite Abgasströmungsweg zu einem Abgasauslass führen,
- eine SCR-Katalysatoranordnung im ersten Abgasströmungsweg stromaufwärts des Abgasauslasses,
- eine Flüssigkeitsbypassleitung zum Ableiten von Flüssigkeit aus einem Flüssigkeitssammelbereich im Abgaskanal stromaufwärts bezüglich der Strömungsweg-Umschalteinheit zu einem Flüssigkeitsabgabebereich zur Abgabe von Flüssigkeit in den zweiten Abgasströmungsweg stromabwärts der Strömungsweg-Umschalteinheit.

Bei der erfindungsgemäß aufgebauten Abgasbehandlungsanordnung besteht grundsätzlich die Möglichkeit, abhängig vom Betriebszustand einer Brennkraftmaschine bzw. einer Abgasanlage einen mehr oder weniger großen Teil des Abgasstroms durch den ersten Abgasströmungsweg und somit durch die SCR-Katalysatoranordnung zu leiten, oder durch den strömungstechnisch zum ersten Abgasströmungsweg parallelen zweiten Abgasströmungsweg zu leiten und somit die SCR-Katalysatoranordnung zu umgehen. Abhängig vom Betriebszustand einer Brennkraftmaschine oder eines stromaufwärts einer derartigen Abgasbehandlungsanordnung angeordneten Injektors, mit welchem flüssiger Kohlenwasserstoff, also Kraftstoff, in den Abgasstrom eingeleitet werden kann, beispielsweise um in einem einen Partikelfilter umfassenden Abgasbehandlungssystem eine Reinigung des Partikelfilters durchzuführen, enthält der Abgasstrom einen mehr oder weniger großen Anteil von in Tröpfchenform mitgeführtem, flüssigem Kohlenwasserstoff. Da derartiger flüssiger Kohlenwasserstoff die Funktionalität des Katalysatormaterials einer SCR-Katalysatoranordnung beeinträchtigen kann, wird mit dem erfindungsgemäßen Aufbau dafür gesorgt, dass Flüssigkeit, also beispielsweise im Abgasstrom mitgeführter flüssiger Kohlenwasserstoff, im Flüssigkeitssammelbereich aus dem Abgasstrom ausgeschieden wird und sich dort sammeln kann, um dann über die Flüssigkeitsbypassleitung weiter stromabwärts in den zweiten Abgasströmungsweg eingeleitet zu werden. Es wird somit ein Eintreten von flüssigem, also unverbranntem Kohlenwasserstoff in den ersten Abgasströmungsweg und somit die SCR-Katalysatoranordnung weitestgehend vermieden. Gleichwohl kann der Kohlenwasserstoff weiter stromabwärts, insbesondere stromabwärts der SCR-Katalysatoranordnung, beispielsweise in einem Partikelfilter zur Temperaturerhöhung beispielsweise zum Abbrennen von am Partikelfilter niedergeschlagenen Rußpartikeln genutzt werden.

Für ein effizientes Abscheiden von Flüssigkeit aus dem Abgasstrom kann der Flüssigkeitssammelbereich im Abgaskanal ein in Richtung stromaufwärts offenes und in Richtung stromabwärts im Wesentlichen abgeschlossenes Flüssigkeitssammelvolumen und eine zu der Flüssigkeitsbypassleitung offene Flüssigkeitsableitöffnung umfassen, wobei zum Vermeiden einer Beeinträchtigung der Abgasströmung vorzugsweise das Flüssigkeitssammelvolumen ein Abgasströmungsvolumen im Abgaskanal ringartig umgibt.

Das Flüssigkeitssammelvolumen kann zwischen einer Wand eines ersten Abgaskanalelements des Abgaskanals und einer Wand eines zweiten Abgaskanalelements gebildet sein. Hierzu kann das zweite Abgaskanalelement in das erste Abgaskanalelement, beispielsweise in ein stromabwärtiges Ende des ersten Abgaskanalelements, eingesetzt sein, und das Flüssigkeitssammelvolumen kann zwischen einem in dem ersten Abgaskanalelement sich erstreckenden Abschnitt der Wand des zweiten Abgaskanalelements und einem das zweite Abgaskanalelement umgebenden Abschnitt der Wand des ersten Abgaskanalelements gebildet sein.

Bei einer besonders vorteilhaften Ausgestaltung wird vorgeschlagen, dass die SCR-Katalysatoranordnung in einem den Abgasauslass bereitstellenden oder zu dem Abgasauslass führenden Gehäuse angeordnet ist und eine Auslassöffnung der SCR-Katalysatoranordnung zu dem Abgasauslass offen ist, und dass der zweite Abgasströmungsweg ein die SCR-Katalysatoranordnung aufnehmendes und zu dem Abgasauslass führendes Innenvolumen des Gehäuses umfasst. Die SCR-Katalysatoranordnung liegt somit in einem Volumen, welches von im zweiten Abgasströmungsweg strömendem Abgas durchströmt wird, so dass dieser Abgasstrom dazu genutzt werden kann, Wärme auf die SCR-Katalysatoranordnung zu übertragen und diese auch von außen zu erwärmen bzw. auf einer für die Durchführung einer katalytischen Reaktion erforderlichen Temperatur zu halten.

Der Flüssigkeitsabgabebereich kann beispielsweise zu dem Innenvolumen des Gehäuses offen sein.

Zum Einrichten der verschiedenen Abgasströmungswege kann der erste Abgasströmungsweg eine erste Abgasleitanordnung zum Leiten von Abgas von der Strömungsweg-Umschalteinheit zu einem ersten Abgaseinlass des Gehäuses umfassen, wobei eine Einlassöffnung der SCR-Katalysatoranordnung zu dem ersten Abgaseinlass des Gehäuses offen ist oder/und diesen bereitstellt, und der zweite Abgasströmungsweg kann eine zweite Abgasleitanordnung zum Leiten von Abgas von der Strömungsweg-Umschalteinheit zu einem zu dem Innenvolumen des Gehäuses offenen zweiten Abgaseinlass des Gehäuses umfassen.

Wenn dabei der Flüssigkeitsabgabebereich an dem Gehäuse benachbart zu dem zweiten Abgaseinlass angeordnet ist, wird durch den Abgasstrom im zweiten Abgasströmungsweg beim Eintritt in das Innenvolumen des Gehäuses ein Venturieffekt erzeugt, welcher die Abgabe von durch die Flüssigkeitsbypassleitung geleiteter Flüssigkeit in das Innenvolumen des Gehäuses unterstützt

Bei einem einfach zu realisierenden Aufbau kann die Strömungsweg-Umschalteinheit eine Stellklappenanordnung umfassen.

Die Erfindung betrifft ferner eine Abgasanlage für einen Brennkraftmaschine, umfassend eine erfindungsgemäß aufgebaute Abgasbehandlungsanordnung.

Um in einer derartigen Abgasanlage eine weiter verbesserte Reinigungswirkung für das diese durchströmende Abgas bereitstellen zu können, kann stromabwärts des Abgasauslasses wenigstens ein Abgasbehandlungssystem angeordnet sein.

Dabei kann wenigstens ein Abgasbehandlungssystem einen Oxidationskatalysator oder/und einen Partikelfilter umfassen. Weiter kann wenigstens ein Abgasbehandlungssystem eine weitere SCR-Katalysatoranordnung umfassen, so dass die in der erfindungsgemäß aufgebauten Abgasbehandlungsanordnung vorgesehene SCR-Katalysatoranordnung einen Vor-SCR-Katalysator bereitstellt.

Um bei einer Abgasanlage die Schwerkraft zum Ableiten von Flüssigkeit aus dem Flüssigkeitssammelvolumen nutzen zu können, wird weiter vorgeschlagen, dass die Flüssigkeitsbypassleitung von einem in einer Höhenrichtung unteren Bereich des Flüssigkeitssammelvolumens weg führt, oder/und dass der Flüssigkeitsabgabebereich in der Höhenrichtung unter dem Flüssigkeitssammelvolumen angeordnet ist. Es ist in diesem Zusammenhang darauf hinzuweisen, dass die Höhenrichtung in einem Erdkoordinatensystem im Wesentlichen einer Vertikalrichtung, also einer Schwerkraftrichtung, entspricht.

Die vorliegende Erfindung wird nachfolgend mit Bezug auf die beiliegenden Figuren detailliert beschrieben. Es zeigt:
- Fig. 1: eine perspektivische Ansicht einer Abgasbehandlungsanordnung mit zwei parallelen Abgasströmungswegen in Blickrichtung I in Fig. 2;
- Fig. 2: eine andere perspektivische Ansicht der Abgasbehandlungsanordnung in Blickrichtung II in Fig. 1;
- Fig. 3: eine weitere perspektivische Ansicht der Abgasbehandlungsanordnung in Blickrichtung III in Fig. 2;
- Fig. 4: eine Seitenansicht der Abgasbehandlungsanordnung in Blickrichtung IV in Fig. 3;
- Fig. 5: die Abgasbehandlungsanordnung mit aufgeschnitten dargestelltem Gehäuse;
- Fig. 6: einen aufgeschnitten dargestellten Abgaskanal der Abgasbehandlungsanordnung;
- Fig. 7: einen vergrößert dargestellten Ausschnitt der Fig. 6 im Bereich eines Flüssigkeitssammelbereichs.

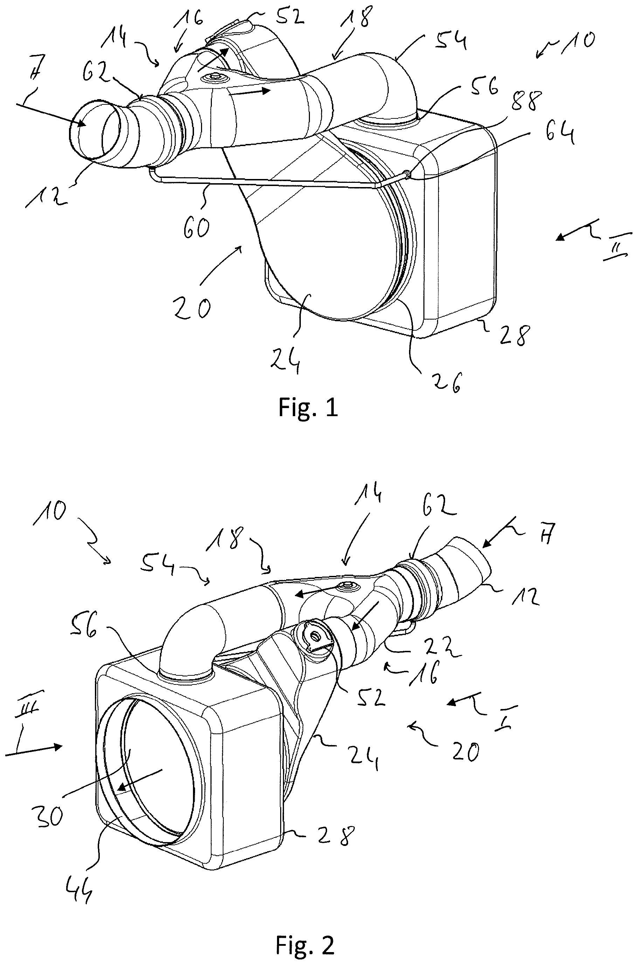

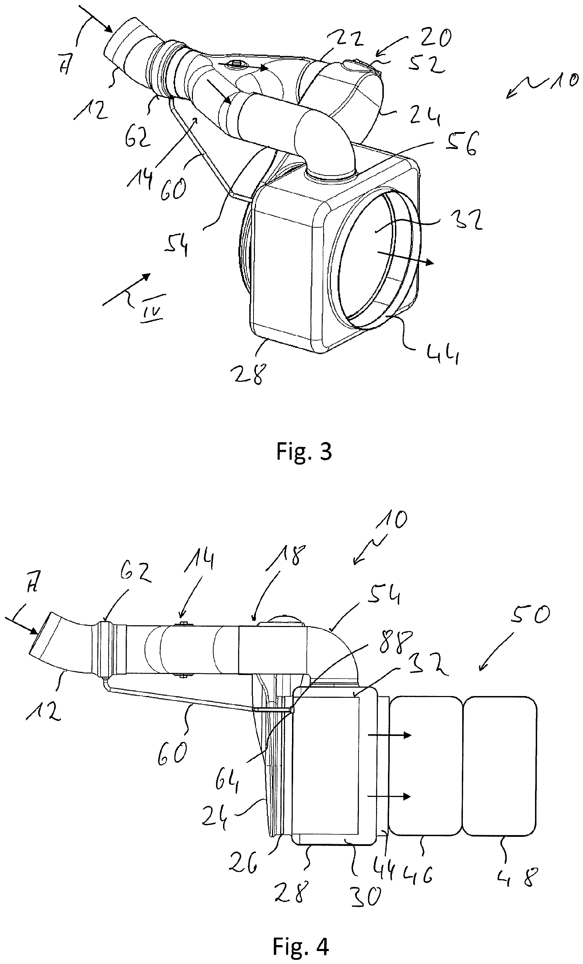

Die Fig. 1 bis 5 zeigen in verschiedenen perspektivischen Darstellungen eine Abgasbehandlungsanordnung 10 für eine Abgasanlage einer Brennkraftmaschine. Die Abgasbehandlungsanordnung 10 umfasst als stromaufwärtigen Systembereich einen allgemein mit 12 bezeichneten Abgaskanal, durch welchen der von einer Brennkraftmaschine ausgestoßene Abgasstrom A strömt. Der Abgaskanal 12 führt zu einer nach Art einer Strömungsweiche ausgebildeten bzw. arbeitenden Strömungsweg-Umschalteinheit 14. An der Strömungsweg-Umschalteinheit 14 findet eine Aufzweigung in einen ersten Abgasströmungsweg 16 und einen zum ersten Abgasströmungsweg 16 strömungstechnisch, also nicht notwendigerweise in geometrischer Hinsicht parallelen zweiten Abgasströmungsweg 18 statt.

Der erste Abgasströmungsweg 16 umfasst eine allgemein mit 20 bezeichnete erste Abgasleitanordnung mit einem von der Strömungsweg-Umschalteinheit 14 weg führenden, rohrartigen Leitungsabschnitt 22 und einem an den Leitungsabschnitt 22 anschließenden, gehäuseartig ausgebildeten Leitungsabschnitt 24. Der Leitungsabschnitt 24 führt zu einem ersten Abgaseinlass 26 eines beispielsweise kastenartig ausgebildeten Gehäuses 28.

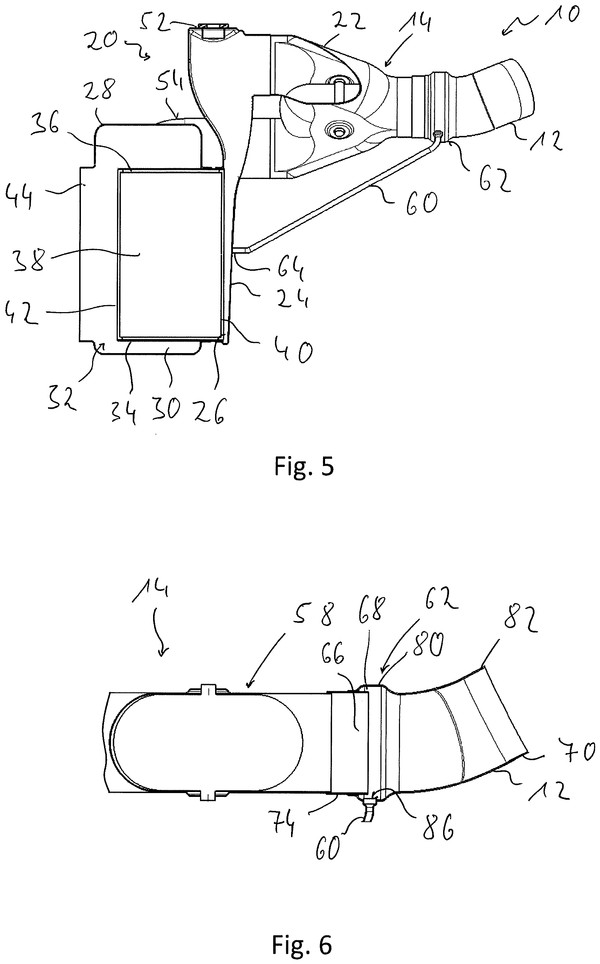

In einem Innenvolumen 30 des in Fig. 5 offen dargestellten Gehäuses 28 ist eine allgemein mit 32 bezeichnete SCR-Katalysatoranordnung angeordnet. Diese umfasst einen rohrartigen Mantel 34, in welchem beispielsweise durch eine Fasermatte 36 oder dergleichen ein mit katalytisch wirksamem Material aufgebautes oder/und beschichtetes, poröses und somit von Abgas durchströmbares Abgasbehandlungselement 38 getragen ist. Eine Einlassöffnung 40 der SCR-Katalysatoranordnung 32 ist zum ersten Abgaseinlass 26 des Gehäuses 28 offen bzw. stellt diesen bereit, so dass durch den Leitungsabschnitt 24 bzw. den ersten Abgasströmungsweg 20 geleitetes Abgas in die Einlassöffnung 40 der SCR-Katalysatoranordnung 32 einströmt und somit das Abgasbehandlungselement 38 derselben durchströmt.

Eine Auslassöffnung 42 der SCR-Katalysatoranordnung 32 liegt einem am Gehäuse 28 vorgesehenen Abgasauslass 44 gegenüber, so dass die SCR-Katalysatoranordnung 32 durchströmendes Abgas nach dem Austritt aus der Auslassöffnung 42 in Richtung zum Abgasauslass 44 strömt und über den Auslass 44 die Abgasbehandlungsanordnung 10 beispielsweise zu weiteren Abgasbehandlungssystemen 46, 48 einer allgemein mit 50 bezeichneten und auch die Abgasbehandlungsanordnung 10 umfassenden Abgasanlage einer Brennkraftmaschine strömt. Diese weiteren Abgasbehandlungssysteme 46, 48 können beispielsweise einen Oxidationskatalysator, insbesondere Diese-Oxidationskatalysator, einen Partikelfilter, insbesondere Diesel-Partikelfilter, und eine weitere SCR-Katalysatoranordnung umfassen, so dass die im Gehäuse 28 angeordnete SCR-Katalysatoranordnung 32 einen Vor-SCR-Katalysator bereitstellt.

Das zur Durchführung einer selektiven katalytischen Reduktion in der SCR-Katalysatoranordnung 32 erforderliche Reaktionsmittel, beispielsweise eine Harnstoff/Wasser-Lösung, kann im Bereich eines Einspritzbereichs 52 in dem Leitungsabschnitt 22 vermittels eines in den Figuren nicht dargestellten Injektors eingespritzt werden und beim Durchströmen des ersten Abgasströmungswegs 16 sich vor Einleitung in die SCR-Katalysatoranordnung 32 mit dem Abgas vermischen.

Der zweite Abgasströmungsweg 18 umfasst, anschließend an die Strömungsweg-Umschalteinheit 14, eine zweite, beispielsweise rohrartig bzw. nach Art eines Krümmers ausgebildete Abgasleitanordnung 54. Diese führt den im zweiten Abgasströmungsweg 18 strömenden Abgasstrom in Richtung zu einem zweiten Abgaseinlass 56 des Gehäuses 28. Über diesen zweiten Einlass 56 ist die Abgasleitanordnung 54 zum Innenvolumen 30 des Gehäuses 28 offen, so dass dieses Innenvolumen 30 einen zum Abgasauslass 44 führenden Teil des zweiten Abgasströmungswegs 18 bereitstellt. Das im zweiten Abgasströmungsweg 18 durch das Innenvolumen 30 strömende Abgas umströmt die SCR-Katalysatoranordnung 32 an ihrer Außenseite und kann somit Wärme auf diese übertragen. Ein Eintritt des den zweiten Abgasströmungsweg 18 durchströmenden Abgasstroms in die SCR-Katalysatoranordnung 32 im Bereich der Auslassöffnung 42 erfolgt nicht, da der das Innenvolumen 30 durchströmende Abgasstrom, so wie durch Strömungspfeile angedeutet, aufgrund des wesentlich geringeren Strömungswiderstandes unmittelbar zum Abgasauslass 44 und dem dann folgenden Teil der Abgasanlage 50 strömt.

Die Strömungsweg-Umschalteinheit 14 kann eine in Fig. 6 in prinzipieller Weise dargestellte Stellklappenanordnung 58 umfassen. Die Stellklappenanordnung 58 kann beispielsweise so ausgebildet sein, dass sie zwischen zwei Stellzuständen umschaltbar ist. In einem der Stellzustände ist der zweite Abgasströmungsweg 18 gegen Durchströmung abgesperrt und der erste Abgasströmungsweg 16 ist zur Durchströmung freigegeben. Im zweiten Stellzustand ist der erste Abgasströmungsweg 16 abgesperrt, und der zweite Abgasströmungsweg 18 ist zur Durchströmung freigegeben. Bei einer alternativen Ausgestaltungsart der Strömungsweg-Umschalteinheit 14 kann die Stellklappenanordnung 58 nach Art einer bei Abgasanlagen eingesetzten Drosselklappe ausgebildet sein, welche beispielsweise in dem zum zweiten Abgasströmungsweg 18 führenden Bereich der Strömungsweg-Umschalteinheit 14 angeordnet sein kann. Durch eine derart aufgebaute bzw. wirkende Stellklappenanordnung 58 kann in einem ersten Stellzustand der zweite Abgasströmungsweg 18 zum Durchströmen freigegeben sein, während in einem zweiten Stellzustand der zweite Abgasströmungsweg 18 gegen Durchströmung im Wesentlichen gesperrt ist. Da aufgrund des Vorsehens der SCR-Katalysatoranordnung 32 im ersten Abgasströmungsweg 16 der erste Abgasströmungsweg 16 einen deutlich höheren Strömungswiderstand für das Abgas bereitstellt, wird bei zur Durchströmung freigegebenem zweitem Abgasströmungsweg 18 der über den Abgaskanal 12 herangeführte Abgasstrom A im Wesentlichen vollständig durch den zweiten Abgasströmungsweg 18 strömen.

Soll eine Aufteilung des Abgasstroms A erfolgen, kann die Stellklappenanordnung 58 in eine Zwischenstellung gebracht werden, in welche sie keinen der beiden Abgasströmungswege 16, 18 vollständig absperrt bzw. vollständig freigibt, so dass beispielsweise zum effizienten Erwärmen des Abgasbehandlungselements 38 der SCR-Katalysatoranordnung 32 ein Teil des Abgasstroms A über den ersten Abgasströmungsweg 18 durch das Abgasbehandlungselement 38 hindurchgeleitet wird und der verbleibende Teil des Abgasstroms A über den zweiten Abgasströmungsweg 18 in das Innenvolumen 30 des Gehäuses 28 strömt und dabei durch Umströmen des Mantels 34 der SCR-Katalysatoranordnung 32 Wärme von außen auf diese überträgt.

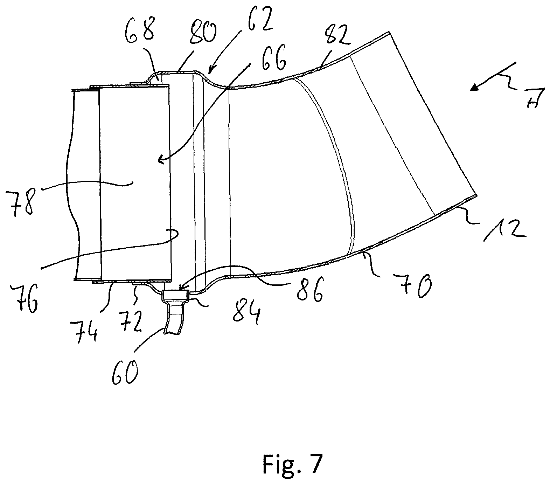

Die Abgasbehandlungsanordnung 10 umfasst ferner eine beispielsweise rohrartig ausgebildete Flüssigkeitsbypassleitung 60. Diese führt von einem am Abgaskanal 12 gebildeten Flüssigkeitssammelbereich 62 zu einem am Gehäuse 28 gebildeten Flüssigkeitsabgabebereich 64. Der in Fig. 7 detaillierter dargestellte Flüssigkeitssammelbereich umfasst im Abgaskanal 12 ein ein Abgasströmungsvolumen 66 im Abgaskanal 12 ringartig umgebendes Flüssigkeitssammelvolumen 68. Dieses ist in Richtung stromaufwärts offen und ist in Richtung stromabwärts im Wesentlichen abgeschlossen.

Der Abgaskanal 12 umfasst im dargestellten Ausgestaltungsbeispiel ein erstes Abgaskanalelement 70 und ein in ein stromabwärtiges Ende 72 des ersten Abgaskanalelements 70 eingesetztes, beispielsweise rohrartiges zweites Abgaskanalelement 74. Ein Abschnitt 76 einer Wand 78 des zweiten Abgaskanalelements 74 erstreckt sich in Richtung stromaufwärts in das erste Abgaskanalelement 70 hinein und ist von einem ringartigen Ausbauchungsbereich 80 einer Wand 82 des ersten Abgaskanalelements 70 umgeben. Somit stellt der Übergang von ersten Abgaskanalelement 70 zum zweiten Abgaskanalelement 74 im Wesentlichen keine Strömungseinschnürung bereit, während gleichzeitig das in Richtung stromaufwärts offene Flüssigkeitssammelvolumen 68 gebildet ist.

An einem Umfangsbereich des Flüssigkeitssammelvolumens 68 ist an der Wand 82 des ersten Abgaskanalelements 70 die Flüssigkeitsbypassleitung 60 an einen Anschlussstutzen 84 angeschlossen. Im Bereich dieses Anschlussstutzens 84 ist eine Flüssigkeitsableitöffnung 86 gebildet, über welche das Flüssigkeitssammelvolumen 68 zur Flüssigkeitsbypassleitung 60 offen ist. Die Flüssigkeitsbypassleitung 60 führt zu dem Gehäuse 28 bzw. einem daran benachbart zu dem zweiten Abgaseinlass 56 angeordneten Stutzen 88, über welchen die Flüssigkeitsbypassleitung 60 an das Gehäuse 28 angeschlossen ist und der Flüssigkeitsabgabebereich 64 zum Innenvolumen 30 unmittelbar benachbart zum zweiten Abgaseinlass 56 offen ist.

Die Flüssigkeitsableitöffnung 86 ist am Flüssigkeitssammelvolumen 68 in einem in einer Höhenrichtung, also einer Schwerkraftrichtung unteren Bereich vorgesehen, so dass unter der Einwirkung der Schwerkraft im Flüssigkeitssammelvolumen 68 sich ansammelnde Flüssigkeit zur Flüssigkeitsableitöffnung 86 und durch diese in die Flüssigkeitsbypassleitung 60 fließt. Weiterhin ist der Flüssigkeitsabgabebereich 64 in dieser Höhenrichtung unter dem Flüssigkeitssammelvolumen 68 angeordnet, so dass unter der Einwirkung der Schwerkraft die aus dem Flüssigkeitssammelvolumen 68 abschließende Flüssigkeit zum Flüssigkeitsabgabebereich 64 und über diesen in den zweiten Abgasströmungsweg geleitet wird.

Abhängig vom Betriebszustand einer Brennkraftmaschine oder eines stromaufwärts des Abgaskanals 12 angeordneten Injektors für flüssigen Kohlenwasserstoff, also Kraftstoff, kann der Abgasstrom A nicht verbrannten, in Tröpfchenform mitgeführten flüssigen Kohlenwasserstoff enthalten. Dieser kann bzw. soll beispielsweise in einem der Abgasbehandlungssysteme 46 bzw. 48 genutzt werden, um dort durch Oxidation, also Verbrennung, die Temperatur zu erhöhen. Beispielsweise kann dies in einem Partikelfilter genutzt werden, um dort niedergeschlagene Rußpartikel abzubrennen. Da das Einleiten von nicht verbranntem, flüssigem Kohlenwasserstoff in die SCR-Katalysatoranordnung 32 vermieden werden soll, überbrückt die Flüssigkeitsbypassleitung 60 die Strömungsweg-Umschalteinheit 14, so dass unabhängig davon, in welchem Stellzustand diese ist, im Flüssigkeitssammelbereich 62 aus dem Abgasstrom A abgeschiedener und dort gesammelter flüssiger Kohlenwasserstoff stromabwärts der Strömungsweg-Umschalteinheit 14 in den zweiten Abgasströmungsweg 18 geleitet wird und somit, ebenso wie der gesamte zweite Abgasströmungsweg 18, parallel zu dem die SCR-Katalysatoranordnung 32 enthaltenden ersten Abgasströmungsweg 16 geleitet wird. Die Gefahr, dass flüssiger Kohlenwasserstoff in die SCR-Katalysatoranordnung 32 eintritt, kann somit weitestgehend ausgeschlossen werden. Gleichwohl kann im Bereich des Flüssigkeitssammelbereichs 62 sich ansammelnder flüssiger Kohlenwasserstoff weiter stromabwärts, insbesondere auch stromabwärts der SCR-Katalysatoranordnung 32, in der vorangehend beschriebenen Art und Weise in dann folgenden Abgasbehandlungssystemen 46 bzw. 48 genutzt werden.

## Patentansprüche

1. Abgasbehandlungsanordnung für eine Abgasanlage einer Brennkraftmaschine, umfassend:
- einen zu einer Strömungsweg-Umschalteinheit (14) führenden Abgaskanal (12), wobei die Strömungsweg-Umschalteinheit (14) zum Verändern von in einen ersten Abgasströmungsweg (16) stromabwärts der Strömungsweg-Umschalteinheit (14) und einen zweiten Abgasströmungsweg (18) stromabwärts der Strömungsweg-Umschalteinheit (14) geleiteten Abgasstromanteilen eines den Abgaskanal (12) durchströmenden Abgasstroms (A) ausgebildet ist, wobei der erste Abgasströmungsweg (16) und der zweite Abgasströmungsweg (18) zu einem Abgasauslass (44) führen,
- eine SCR-Katalysatoranordnung (32) im ersten Abgasströmungsweg (16) stromaufwärts des Abgasauslasses (44), **dadurch gekennzeichnet dass** die Abgasbehandlungsanordnung eine Flüssigkeitsbypassleitung (60) aufweist zum Ableiten von Flüssigkeit aus einem Flüssigkeitssammelbereich (62) im Abgaskanal (12) stromaufwärts bezüglich der Strömungsweg-Umschalteinheit (14) zu einem Flüssigkeitsabgabebereich (64) zur Abgabe von Flüssigkeit in den zweiten Abgasströmungsweg (18) stromabwärts der Strömungsweg-Umschalteinheit (14).

2. Abgasbehandlungsanordnung nach Anspruch 1, **dadurch gekennzeichnet, dass** der Flüssigkeitssammelbereich (62) im Abgaskanal (12) ein in Richtung stromaufwärts offenes und in Richtung stromabwärts im Wesentlichen abgeschlossenes Flüssigkeitssammelvolumen (68) und eine zu der Flüssigkeitsbypassleitung (60) offene Flüssigkeitsableitöffnung (86) umfasst.

3. Abgasbehandlungsanordnung nach Anspruch 2, **dadurch gekennzeichnet, dass** das Flüssigkeitssammelvolumen (68) ein Abgasströmungsvolumen (66) im Abgaskanal (12) ringartig umgibt.

4. Abgasbehandlungsanordnung nach Anspruch 2 oder 3, **dadurch gekennzeichnet, dass** das Flüssigkeitssammelvolumen (68) zwischen einer Wand (82) eines ersten Abgaskanalelements (70) des Abgaskanals (12) und einer Wand (78) eines zweiten Abgaskanalelements (74) gebildet ist.

5. Abgasbehandlungsanordnung nach Anspruch 4, **dadurch gekennzeichnet, dass** das zweite Abgaskanalelement (74) in das erste Abgaskanalelement (70) eingesetzt ist, und dass das Flüssigkeitssammelvolumen (68) zwischen einem in dem ersten Abgaskanalelement (70) sich erstreckenden Abschnitt (76) der Wand (78) des zweiten Abgaskanalelements (74) und einem das zweite Abgaskanalelement (74) umgebenden Abschnitt (80) der Wand (82) des ersten Abgaskanalelements (70) gebildet ist.

6. Abgasbehandlungsanordnung nach einem der vorangehenden Ansprüche, **dadurch gekennzeichnet, dass** die SCR-Katalysatoranordnung (32) in einem den Abgasauslass (44) bereitstellenden oder zu dem Abgasauslass (44) führenden Gehäuse (28) angeordnet ist und eine Auslassöffnung (42) der SCR-Katalysatoranordnung (32) zu dem Abgasauslass (44) offen ist, und dass der zweite Abgasströmungsweg (18) ein die SCR-Katalysatoranordnung (32) aufnehmendes und zu dem Abgasauslass (44) führendes Innenvolumen (30) des Gehäuses (28) umfasst.

7. Abgasbehandlungsanordnung nach Anspruch 6, **dadurch gekennzeichnet, dass** der Flüssigkeitsabgabebereich (64) zu dem Innenvolumen (30) des Gehäuses (28) offen ist.

8. Abgasbehandlungsanordnung noch Anspruch 6 oder 7, **dadurch gekennzeichnet, dass** der erste Abgasströmungsweg (16) eine erste Abgasleitanordnung (20) zum Leiten von Abgas von der Strömungsweg-Umschalteinheit (14) zu einem ersten Abgaseinlass (26) des Gehäuses (28) umfasst, wobei eine Einlassöffnung (40) der SCR-Katalysatoranordnung (32) zu dem ersten Abgaseinlass (26) des Gehäuses (28) offen ist oder/und diesen bereitstellt, und dass der zweite Abgasströmungsweg (18) eine zweite Abgasleitanordnung (54) zum Leiten von Abgas von der Strömungsweg-Umschalteinheit (14) zu einem zu dem Innenvolumen (30) des Gehäuses (28) offenen zweiten Abgaseinlass (56) des Gehäuses (28) umfasst.

9. Abgasbehandlungsanordnung nach Anspruch 8, **dadurch gekennzeichnet, dass** der Flüssigkeitsabgabenbereich (64) an dem Gehäuse (28) benachbart zu dem zweiten Abgaseinlass (56) angeordnet ist.

10. Abgasbehandlungsanordnung nach einem der vorangehenden Ansprüche, **dadurch gekennzeichnet, dass** die Strömungsweg-Umschalteinheit (14) eine Stellklappenanordnung (58) umfasst.

11. Abgasanlage für einen Brennkraftmaschine, umfassend eine Abgasbehandlungsanordnung (10) nach einem der vorangehenden Ansprüche.

12. Abgasanlage nach Anspruch 11, **dadurch gekennzeichnet, dass** stromabwärts des Abgasauslasses (44) wenigstens ein Abgasbehandlungssystem (46, 48) angeordnet ist.

13. Abgasanlage nach Anspruch 12, **dadurch gekennzeichnet, dass** wenigstens ein Abgasbehandlungssystem (46, 48) einen Oxidationskatalysator oder/und einen Partikelfilter oder/und eine weitere SCR-Katalysatoranordnung umfasst.

14. Abgasanlage nach einem der Ansprüche 11-13, **dadurch gekennzeichnet, dass** die Flüssigkeitsbypassleitung (60) von einem in einer Höhenrichtung unteren Bereich des Flüssigkeitssammelvolumens (68) weg führt, oder/und dass der Flüssigkeitsabgabebereich (64) in der Höhenrichtung unter dem Flüssigkeitssammelvolumen (68) angeordnet ist.

## Claims

1. Exhaust gas treatment arrangement for an exhaust gas system of an internal combustion engine, comprising:
- an exhaust gas channel (12) leading to a flow path switching unit (14), wherein the flow path switching unit (14) is configured for changing exhaust gas parts of an exhaust gas stream (A) flowing through the exhaust gas channel (12), which are conducted into a first exhaust gas flow path (16) downstream of the flow path switching unit (14) and into a second exhaust gas flow path (18) downstream of the flow path switching unit (14), wherein the first exhaust gas flow path (16) and the second exhaust gas flow path (18) lead to an exhaust gas outlet (44),
- an SCR catalyst arrangement (32) in the first exhaust gas flow path (16) upstream of the exhaust gas outlet (44),
**characterized in that** the exhaust gas treatment arrangement comprises a liquid bypass line (60) for draining liquid from a liquid collection region (62) in the exhaust gas channel (12) upstream relative to the flow path switching unit (14) to a liquid discharge region (64) for discharging liquid into the second exhaust gas flow path (18) downstream of the flow path switching unit (14).

2. Exhaust gas treatment arrangement as claimed in claim 1, **characterized in that** the liquid collection region (62) in the exhaust gas channel (12) comprises a liquid collection volume (68) which is open in the upstream direction and substantially closed in the downstream direction, and a liquid drainage opening (86) which is open to the liquid bypass line (60).

3. Exhaust gas treatment arrangement as claimed in claim 2, **characterized in that** the liquid collection volume (68) surrounds an exhaust gas flow volume (66) in the exhaust gas channel (12) in the manner of a ring.

4. Exhaust gas treatment arrangement as claimed in claim 2 or 3, **characterized in that** the liquid collection volume (68) is formed between a wall (82) of a first exhaust gas channel element (70) of the exhaust gas channel (12) and a wall (78) of a second exhaust gas channel element (74).

5. Exhaust gas treatment arrangement as claimed in claim 4, **characterized in that** the second exhaust gas channel element (74) is inserted in the first exhaust gas channel element (70), and the liquid collection volume (68) is formed between a portion (76) of the wall (78) of the second exhaust gas channel element (74) extending in the first exhaust gas channel element (70) and a portion (80) of the wall (82) of the first exhaust gas channel element (70) surrounding the second exhaust gas channel element (74).

6. Exhaust gas treatment arrangement as claimed in any of the preceding claims, **characterized in that** the SCR catalyst arrangement (32) is arranged in a housing (28) providing the exhaust gas outlet (44) or leading to the exhaust gas outlet (44), and an outlet opening (42) of the SCR catalyst arrangement (32) is open to the exhaust gas outlet (44), and the second exhaust gas flow path (18) comprises an inner volume (30) of the housing (28) which receives the SCR catalyst arrangement (32) and leads to the exhaust gas outlet (44).

7. Exhaust gas treatment arrangement as claimed in claim 6, **characterized in that** the liquid discharge region (64) is open to the inner volume (30) of the housing (28).

8. Exhaust gas treatment arrangement as claimed in claim 6 or 7, **characterized in that** the first exhaust gas flow path (16) comprises a first exhaust gas conduction arrangement (20) for conducting exhaust gas from the flow path switching unit (14) to a first exhaust gas inlet (26) of the housing (28), wherein an inlet opening (40) of the SCR catalyst arrangement (32) is open to and/or provides the first exhaust gas inlet (26) of the housing (28), and the second exhaust gas flow path (18) comprises a second exhaust gas conduction arrangement (54) for conducting exhaust gas from the flow path switching unit (14) to a second exhaust gas inlet (56) of the housing (26) which is open to the inner volume (30) of the housing (28).

9. Exhaust gas treatment arrangement as claimed in claim 8, **characterized in that** the liquid discharge region (64) is arranged on the housing (28) adjacent to the second exhaust gas inlet (56).

10. Exhaust gas treatment arrangement as claimed in any of the preceding claims, **characterized in that** the flow path switching unit (14) comprises a regulating valve arrangement (58).

11. Exhaust gas system for an internal combustion engine, comprising an exhaust gas treatment arrangement (10) as claimed in any of the preceding claims.

12. Exhaust gas system as claimed in claim 11, **characterized in that** at least one exhaust gas treatment system (46, 48) is arranged downstream of the exhaust gas outlet (44).

13. Exhaust gas system as claimed in claim 12, **characterized in that** at least one exhaust gas treatment system (46, 48) comprises an oxidation catalyst and/or a particle filter and/or a further SCR catalyst arrangement.

14. Exhaust gas system as claimed in any of claims 11 - 13, **characterized in that** the liquid bypass line (60) leads away from a region of the liquid collection volume (68) which is lower in the height direction, and/or the liquid discharge region (64) is arranged below the liquid collection volume (68) in the height direction.

## Revendications

1. Dispositif de traitement des gaz d'échappement pour un système de gaz d'échappement d'un moteur à combustion interne, comprenant :
- un canal de gaz d'échappement (12) menant à une unité de commutation de voie d'écoulement (14), dans lequel l'unité de commutation de voie d'écoulement (14) est configurée pour changer des parties de gaz d'échappement d'un flux de gaz d'échappement (A) circulant dans le canal de gaz d'échappement (12), qui sont conduites dans une première voie d'écoulement de gaz d'échappement (16) en aval de l'unité de commutation de voie d'écoulement (14) et dans une deuxième voie d'écoulement de gaz d'échappement (18) en aval de l'unité de commutation de voie d'écoulement (14), dans lequel la première voie d'écoulement de gaz d'échappement (16) et la deuxième voie d'écoulement de gaz d'échappement (18) mènent à une sortie de gaz d'échappement (44),
- un dispositif de catalyseur SCR (32) dans la première voie d'écoulement de gaz d'échappement (16) en amont de la sortie des gaz d'échappement (44),
**caractérisé en ce que** le dispositif de traitement des gaz d'échappement comprend une conduite de dérivation de liquide (60) pour drainer le liquide d'une région de collecte de liquide (62) dans le canal de gaz d'échappement (12) en amont par rapport à l'unité de commutation de voie d'écoulement (14) vers une région d'évacuation de liquide (64) pour évacuer le liquide dans la deuxième voie d'écoulement de gaz d'échappement (18) en aval de l'unité de commutation de voie d'écoulement (14).

2. Dispositif de traitement des gaz d'échappement selon la revendication 1, **caractérisé en ce que** la région de collecte de liquide (62) dans le canal de gaz d'échappement (12) comprend un volume de collecte de liquide (68) qui est ouvert dans la direction amont et sensiblement fermé dans la direction aval, et une ouverture d'évacuation de liquide (86) qui est ouverte à la conduite de dérivation de liquide (60).

3. Dispositif de traitement des gaz d'échappement selon la revendication 2, **caractérisé en ce que** le volume de collecte de liquide (68) entoure un volume d'écoulement de gaz d'échappement (66) dans le canal de gaz d'échappement (12) à la manière d'un anneau.

4. Dispositif de traitement des gaz d'échappement selon la revendication 2 ou 3, **caractérisé en ce que** le volume de collecte de liquide (68) est formé entre une paroi (82) d'un premier élément de canal de gaz d'échappement (70) du canal de gaz d'échappement (12) et une paroi (78) d'un deuxième élément de canal de gaz d'échappement (74).

5. Dispositif de traitement des gaz d'échappement selon la revendication 4, **caractérisé en ce que** le deuxième élément de canal de gaz d'échappement (74) est inséré dans le premier élément de canal de gaz d'échappement (70), et **en ce que** le volume de collecte de liquide (68) est formé entre une partie (76) de la paroi (78) du deuxième élément de canal de gaz d'échappement (74) s'étendant dans le premier élément de canal de gaz d'échappement (70) et une partie (80) de la paroi (82) du premier élément de canal de gaz d'échappement (70) entourant le deuxième élément de canal de gaz d'échappement (74).

6. Dispositif de traitement des gaz d'échappement selon l'une des revendications précédentes, **caractérisé en ce que** le dispositif de catalyseur SCR (32) est disposé dans un boîtier (28) fournissant la sortie de gaz d'échappement (44) ou menant à la sortie de gaz d'échappement (44), et une ouverture de sortie (42) du dispositif de catalyseur SCR (32) est ouverte à la sortie de gaz d'échappement (44), et **en ce que** la deuxième voie d'écoulement de gaz d'échappement (18) comprend un volume intérieur (30) du boîtier (28) recevant le dispositif de catalyseur SCR (32) et menant à la sortie de gaz d'échappement (44).

7. Dispositif de traitement des gaz d'échappement selon la revendication 6, **caractérisé en ce que** la zone d'évacuation des liquides (64) est ouverte sur le volume intérieur (30) du boîtier (28).

8. Dispositif de traitement des gaz d'échappement selon la revendication 6 ou 7, **caractérisé en ce que** la première voie d'écoulement de gaz d'échappement (16) comprend un premier dispositif de conduction des gaz d'échappement (20) pour conduire les gaz d'échappement de l'unité de commutation de voie d'écoulement (14) à une première entrée de gaz d'échappement (26) du boîtier (28), dans lequel une ouverture d'entrée (40) du dispositif catalyseur SCR (32) est ouverte sur et/ou fournit la première entrée de gaz d'échappement (26) du boîtier (28), et la deuxième voie d'écoulement des gaz d'échappement (18) comprend un deuxième dispositif de conduction des gaz d'échappement (54) pour conduire les gaz d'échappement de l'unité de commutation de voie d'écoulement (14) à une deuxième entrée de gaz d'échappement (56) du boîtier (26) qui est ouverte sur le volume intérieur (30) du boîtier (28).

9. Dispositif de traitement des gaz d'échappement selon la revendication 8, **caractérisé en ce que** la région d'évacuation des liquides (64) est disposée sur le boîtier (28) à côté de la deuxième entrée de gaz d'échappement (56).

10. Dispositif de traitement des gaz d'échappement selon l'une des revendications précédentes, **caractérisé en ce que** l'unité de commutation de voie d'écoulement (14) comprend un dispositif de soupape de régulation (58).

11. Système de gaz d'échappement pour un moteur à combustion interne, comprenant un dispositif de traitement des gaz d'échappement (10) selon l'une quelconque des revendications précédentes.

12. Système de gaz d'échappement selon la revendication 11, **caractérisé en ce qu'**au moins un système de traitement des gaz d'échappement (46, 48) est disposé en aval de la sortie des gaz d'échappement (44).

13. Système de gaz d'échappement selon la revendication 12, **caractérisé en ce qu'**au moins un système de traitement des gaz d'échappement (46, 48) comprend un catalyseur d'oxydation et/ou un filtre à particules et/ou un autre arrangement de catalyseur SCR.

14. Système de gaz d'échappement selon l'une des revendications 11 à 13, **caractérisé en ce que** la conduite de dérivation de liquide (60) s'éloigne d'une région du volume de collecte de liquide (68) qui est plus basse dans la direction de hauteur, et/ou la région d'évacuation de liquide (64) est disposée sous le volume de collecte de liquide (68) dans la direction de hauteur.
